# EUROPÄISCHE PATENTANMELDUNG

(11) **EP 0 753 692 A1**
(43) Veröffentlichungstag der Anmeldung: **15.01.1997**
(21) Anmeldenummer: 96110336.3
(22) Anmeldetag: 27.06.1996
(51) Int. Cl.: F16K 15/00, F16K 11/00, F04D 15/00

(54) **Regelsystem zur Regelung von Durchflussmindestmengen und Rückschlagventil**

(30) Priorität: 10.07.1995 DE 19525061
(71) Anmelder: Holter Regelarmaturen GmbH & Co. KG, D-33758 Schloss Holte-Stukenbrock (DE)
(72) Erfinder: Rambow, Gerd, D-51588 Nümbrecht (DE)
(74) Vertreter: Hanewinkel, Lorenz, Dipl.-Phys.

(57) **Zusammenfassung**

Das Regelsystem zur Regelung von Durchflußmindestmengen besteht aus mindestens einer Hauptdurchgangsleitung (3), mindestens einem darin angeordneten Rückschlagventil (1), mindestens einer von der Hauptdurchgangsleitung (3) abzweigenden Bypass-Leitung (4), mindestens einem in der Bypass-Leitung (4) oder an der Abzweigung der Bypass-Leitung (4) angeordneten, steuerbaren Mindestmengenventil (2) und mindestens einer in und/oder an der Hauptdurchgangsleitung (3) angeordneten Meßapparatur (5) zum Erfassen der Durchflußmenge.

Die Durchflußmengen-Meßapparatur (5) ist in das Rückschlagventil (1) integriert und weist eine Vorrichtung (11) zur Lageermittlung eines Schließelementes (10) innerhalb des Rückschlagventils (1) auf, wobei über die Lage des Schließelements (10) der jeweilige Öffnungsquerschnitt des Rückschlagventils (1) und damit die Durchflußmenge bestimmbar ist.

An die Durchflußmengen-Meßapparatur (5) ist eine Anzeige- und/oder Kontrolleinrichtung (7a) und/oder eine Steuereinrichtung (7c) für das Mindestmengenventil (2) angeschlossen.

## Beschreibung

Die Erfindung betrifft ein Regelsystem zur Regelung von Durchflußmindestmengen, mit mindestens einer Hauptdurchgangsleitung, mindestens einem darin angeordneten Rückschlagventil, mindestens einer von der Hauptdurchgangsleitung abzweigenden Bypass-Leitung, mindestens einem in der Bypass-Leitung oder an der Abzweigung der Bypass-Leitung angeordneten steuerbaren Mindestmengenventil und mindestens einer in und/oder an der Hauptdurchgangsleitung angeordneten Meßapparatur zum Erfassen der Durchflußmenge.

Darüber hinaus beinhaltet die Erfindung ein Rückschlagventil, insbesondere zum Einsatz in einem der vorgenannten Durchflußmindestmengenreggelsysteme, mit einem Ventilgehäuse mit mindestens einem Zuflußstutzen und mindestens einem Abflußstutzen und einem im Ventilgehäuse beweglich angeordneten Schließelement, welches im geschlossenen Zustand durch einen hinter dem Ventil bestehenden Druck und/oder mittels einem Rückstellglied entgegen einem vor dem Ventil bestehenden niedrigeren oder gleich hohen Druck gegen einen im Ventilgehäuse angeordneten, zur Abflußseite weisenden Dicht sitz gedrückt wird und welches im geöffneten Zustand durch einen vor dem Ventil bestehenden erhöhten Druck entgegen einem hinter dem Ventil bestehenden niedrigeren Druck und/oder entgegen einer Rückstellkraft vorn Dichtsitz weggedrückt wird.

Die eingangs genannten Regelsysteme zur Regelung von Durchflußmindestmengen werden üblicherweise zum Schutz von Pumpen, z.B. in Speisewasseranlagen im Kraftwerksbereich oder dgl. verwendet. Bei solchen Anlagen wird aus einem Speisewasserbehälter über eine Pumpe Wasser zum Kessel gepumpt. Um die in den Kessel laufende Wassermenge zu regeln, befindet sich üblicherweise vor dem Kessel ein Speisewasserregelventil. Da andererseits aber die Pumpe zur Vermeidung von thermischer Überhitzung immer eine bestimmte Durchflußmindestmenge an Medium benötigt, muß entsprechend der Regelung des Speisewasserregelventils ein Bypass geöffnet werden, durch welchen die überschüssige Menge zurück in den Speisewasserbehälter geleitet werden kann. Zur Regelung dieser durch den Bypass geleiteten Durchflußmenge befindet sich in der Bypass-Leitung ein Mindestmengenventil. Dieses Mindestmengenventil wird üblicherweise in Abhängigkeit von der Durchflußmenge in der Pumpe gesteuert.

Konventionelle Regelsysteme zur Regelung von Durchflußmindestmengen sind daher im allgemeinen so aufgebaut, daß hinter dem Speisewasserbehälter zunächst eine Meßblende, häufig ein Venturirohr, zum Erfassen der Durchflußmenge angeordnet ist. Hinter dieser Meßblende befindet sich dann zunächst die Pumpe, und im weiteren Verlauf in der Hauptdurchgangsleitung ein Rückschlagventil, welches als Sicherheitsventil gegen eine Rückströmung in der Hauptdurchgangsleitung, z.B. beim Ausfall der Pumpe, dient. Hinter der Rückschlagventil befindet sich dann das Speisewasserregelventil.

Zwischen Pumpe und Rückschlagventil zweigt eine Bypass-Leitung ab, die wiederum mit dem Speisewasserbehälter verbunden ist. In der Bypass-Leitung befindet sich das Mindestmengenregelventil. Das Mindestmengenregelventil wird über die Meßblende und einen dazugehörigen Meßumformer, z.B. eine Bartonzelle, motorisch angesteuert. Die Bypass-Leitung wird hierbei gerade so weit geöffnet, daß unabhängig von der Durchflußmenge in den Kessel immer die benötigte Mindestmenge durch die Pumpe fließt.

Solche konventionellen Regelsysteme sind im allgemeinen sehr teuer. Dies betrifft insbesondere das Mindestmengenventil, bzw. dessen Ansteuerung über die Meßblende zur Erfassung der Durchflußmenge, den Meßumformer sowie weiterer elektronischer Komponenten.

Es ist daher Aufgabe der Erfindung, ein entsprechendes Regelsystem so zu verbessern, daß dieses bei gleicher Funktionssicherheit einfacher und mit weniger Komponenten aufgebaut und daher kostengünstiger herstellbar ist.

Diese Aufgabe wird dadurch gelöst, daß die Durchflußmengenmeßapparatur in das Rückschlagventil integriert ist und eine Vorrichtung zur Lageermittlung eines Schließelements innerhalb des Rückschlagventils aufweist, wobei über die Lage des Schließelements der jeweilige Öffnungsquerschnitt des Rückschlagventils, und damit die Durchflußmenge bestimmbar ist.

Bei dem erfindungsgemäßen Regelsystem kann auf eine separate Meßblende und der dazugehörigen Meßumformer verzichtet werden, da die Durchflußmenge in dem ohnehin erforderlichen Rückschlagventil gemessen wird. Die Herstellungskosten für eine erfindungsgemäße Durchflußmengenerfassung in dem Rückschlagventil betragen nur einen Bruchteil der Herstellungskosten von Meßumformer und Meßblende. Darüber hinaus kann auf zusätzliche Schaltschränke zum Unterbringen der Steuerungsanlagen und dgl. verzichtet werden, was zu zusätzlichen Kosteneinsparungen führt. Die Funktionssicherheit ist bei der erfindungsgemäßen Erfassung der Durchflußmenge ebenso gewährleistet wie bei den konventionellen Systemen.

Die Durchflußmengenmeßapparatur im Rückschlagventil kann an eine Anzeige- bzw. Kontrolleinrichtigung, z.B. in einer Leitwarte, angeschlossen sein. Darüber hinaus kann sie an eine Steuereinrichtung für ein beliebiges Mindestmengenventil angeschlossen werden.

Besonders geringe Herstellungskosten entstehen, wenn die Durchflußmengenmeßapparatur einfach einen Endschalter aufweist, welcher bei Öffnung des Rückschlagventils über eine bestimmte Öffnungsstellung hinaus ein Kontroll- und/oder Steuersignal erzeugt. Vorzugsweise wird dieses Steuersignal dann auf ein einfach aufgebautes Mindestmengenventil weitergeleitet, welches eine Auf- und eine Schließstellung aufweist, wobei dann das Mindestmengenventil nur bei Öffnung des Rückschlagventils über einen bestimmten Öffnungsquerschnitt hinaus durch die Steuereinrichtung in die Schließstellung geschaltet wird.

Falls erforderlich, ist es selbstverständlich auch möglich, daß die Durchflußmengenmeßapparatur ein kontinuierliches, mit dem jeweiligen Öffnungsquerschnitt des Rückschlagventils veränderliches Kontroll- und/oder Steuersignal erzeugt. Vorzugsweise ist das Mindestmengenventil in diesem Fall zwischen der Auf- und Schließstellung unter kontinuierlicher Veränderung des Öffnungsquerschnitts des Ventils verstellbar, wobei das Mindestmengenventil in reziproker Abhängigkeit vom Öffnungsquerschnitt des Rückschlagventils durch die Steuereinrichtung verstellt wird.

Das Anzeige-, Kontroll- und/oder Steuersignal kann auf die verschiedensten Arten erfolgen, z.B. elektrisch, hydraulisch, mechanisch, per Lichtschranke etc.

Weiterhin ist es Aufgabe der Erfindung, ein entsprechendes Rückschlagventil zu schaffen, welches zum Einsatz in einem solchen Regelsystem geeignet ist.

Diese Aufgabe wird durch ein Rückschlagventil mit den im Anspruch 8 genannten Merkmalen gelöst.

Die Unteransprüche 9 bis 31 enthalten vorteilhafte Weiterentwicklungen und Ausgestaltungen des erfindungsgemäßen Rückschlagventils.

Das erfindungsgemäße Regelsystem zur Regelung von Durchflußmindestmengen und das erfindungsgemäße Rückschlagventil werden im folgenden unter Hinweis auf die beigefügten Zeichnungen an verschiedenen Ausführungsbeispielen näher beschrieben. Es stellen dar:
- Fig. 1: eine schematische Darstellung des erfindungsgemäßen Regelsystems,
- Fig. 2: ein Schnitt durch ein erfindungsgemäßes Rückschlagventil mit einem einfachen Endschalter und einem entsprechend einfach aufgebauten Mindestmengen-Auf-/Zu-Ventil in der Bypass-Leitung (die Pumpe, der Speisewasserbehälter, die Hauptdurchgangsleitung, die Signalverbindungen und Kontrolleinrichtungen sind schematisch dargestellt),
- Fig. 3: einen Schnitt durch ein erfindungsgemäßes Rückschlagventil mit einer kapazitiven Meßvorrichtung zur kontinuierlichen Lageermittlung des Schließelements und einem entsprechend kontinuierlich regelbaren Mindestmengenventil in der Bypass-Leitung (die Pumpe, der Speisewasserbehälter, die Hauptdurchgangsleitung, die Signalverbindungen und Kontrolleinrichtungen sind schematisch dargestellt),
- Fig. 4: einen Schnitt durch ein erfindungsgemäßes Rückschlagventil mit einem einfachen Endschalter und aus dem Ventilgehäuse geführter Meßstange nach dem Ausführungsbeispiel in Fig. 2,
- Fig. 5: einen Schnitt durch ein erfindungsgemäßes Rückschlagventil mit einem Meßstab in einer am Ventilgehäuse angeordneten Meßkammer und einer Visualisierung der Lage des Schließelements außerhalb des Gehäuses durch einen Magnetring,
- Fig. 6: einen Schnitt durch ein erfindungsgemäßes Rückschlagventil mit einer Visualisierung der Lage des Schließelements bzw. des Meßstabs durch ein in der Meßkammer befindliches Schauglas und mit einem zusätzlich im Gehäuse angeordneten Mindestmengenventil, welches mechanisch mit dem Schließelement des Rückschlagventils zusammenhängt und dadurch automatisch gesteuert wird.

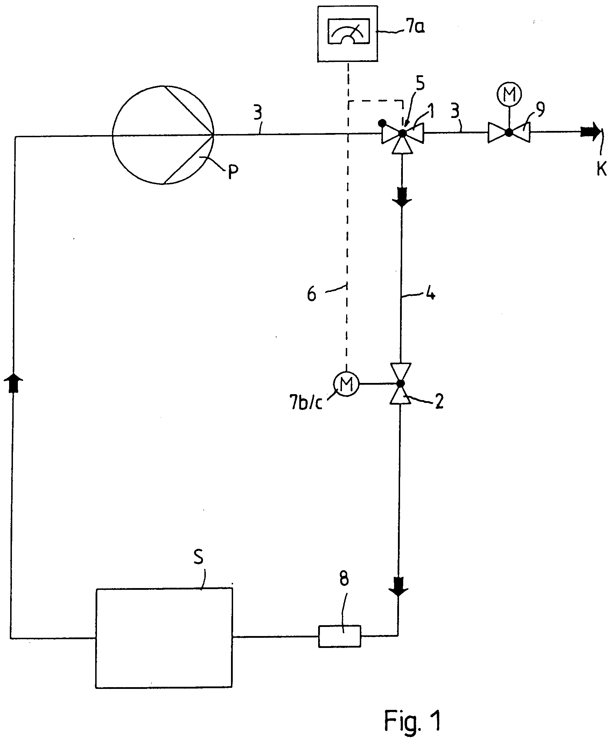

Das Regelsystem zur Regelung von Durchflußmindestmengen besteht aus einer Hauptdurchgangsleitung (3), einem darin angeordneten Rückschlagventil (1), einer von dieser Hauptdurchgangsleitung (3) abweichenden Bypass-Leitung (4) und einem in der Bypass-Leitung (4) angeordneten Mindestmengenventil (2). Die Hauptdurchgangsleitung (3) führt von einem Speisewasserbehälter (S) über eine Pumpe (P) durch das Rückschlagventil (1) und ein motorisch geregeltes Speisewasserregelventil (9) zu einem Kessel (K). Die Bypass-Leitung (4) führt über das Mindestmengenventil (2) und einen Rückdruckregulator (8) zurück zum Speisewasserbehälter (S). In dem in Fig. 1 gezeigten Beispiel zweigt die Bypass-Leitung (4) innerhalb des Rückschlagventils (1) von der Hauptdurchgangsleitung (3) ab.

In das Rückschlagventil (1) ist eine Durchflußmengenmeßapparatur (5) integriert, welche eine Vorrichtung (11) zur Lageermittlung eines Schließelements (10) innerhalb des Rückschlagventils (1) aufweist. Durch die Lage des Schließelements (10) ist der jeweilige Öffnungsquerschnitt des Rückschlagventils (1) und damit die Durchflußmenge bestimmbar. Die Durchflußmengenapparatur (5) ist an einer Anzeige- bzw. Kontrolleinrichtung (7a) in einer Leitwarte oder dgl. angeschlossen. Weiterhin ist die Meßapparatur (5) an eine Steuereinrichtung (7b, 7c) für das Mindestmengenventil (2) angeschlossen.

Das Rückschlagventil (1) besteht aus einem Ventilgehäuse (50) mit einem Zuflußstutzen (20) und einem Abflußstutzen (30). Dieses Ventilgehäuse (50) weist eine Mittelwand (52) auf, welche im wesentlichen parallel zu einer vom Zuflußstutzen (20) zum gegenüberliegenden Abflußstutzen (30) verlaufenden Hauptdurchgangsrichtung (51) verläuft und welche den Gehäuseinnenraum in einen zuflußseitigen und einen abflußseitigen Raum unterteilt.

In der Mittelwand (52) befindet sich quer zur Hauptdurchgangsrichtung (51) eine Durchgangsöffnung (53). Abflußseitig ist diese Durchgangsöffnung (53) mit einem Dichtsitz (13) versehen. Weiterhin weist das Gehäuse (50) eine im wesentlichen parallel zur Mittelwand (52) abflußseitig vor dieser liegende Montagewand (60) auf.

An der Montagewand (60) ist koaxial zur Durchgangsöffnung (53) eine Führungsbuchse (15) angeordnet, in welcher ein Führungsstutzen (16) eines koaxial angeordneten Ventiltellers (10) in loser Fassung axial verschieblich gelagert ist. Zwischen der Montagewand (60) und dem Ventilteller (10) befindet sich eine Feder (14), welche den Ventilteller (10) von der Montagewand (60) aus in Richtung Durchgangsöffnung (53) drückt.

Im geschlossenen Zustand wird durch einen hinter dem Ventil (1) bestehenden Druck und durch die Feder (14) der Ventilteller (10) entgegen einem vor dem Ventil (1) bestehenden niedrigeren oder gleich hohen Druck gegen den Dichtsitz (13) der Durchgangsöffnung (53) gedrückt. Im geöffneten Zustand wird durch einen vor dem Ventil (1) bestehenden erhöhten Druck entgegen dem hinter dem Ventil (1) bestehenden niedrigeren Druck und entgegen der Federkraft der Ventilteller (10) vom Dichtsitz (13) weggedrückt.

Die Montagewand (60) bildet einen Teil der Gehäuseaußenwand (54). Am Führungsstutzen (16) ist in montagewandseitiger Verlängerung desselben ein Meßstab (17) angeordnet.

In einer Ausführungsform ist dieser Meßstab (17) in einer Bohrung (61) durch die Montagewand (60) mit einem Dichtring (62) gegen die Montagewand (60) abgedichtet verschiebbar nach außen geführt.

In einer anderen Ausführungsform ragt der Meßstab (17) in eine an der Montagewand (60) angeordnete bzw. von der Montagewand (60) gebildete Meßkammer (63) hinein. Bei dieser Ausführungsform kann auf den Dichtring (62) verzichtet werden. Es ist damit eine zusätzliche potentielle Leckstelle ausgeschlossen. An der Montagewand (60) befindet sich eine Meßvorrichtung (11), welche den Hub des Meßstabs (17) bezüglich eines Referenzpunkts mißt und die Meßdaten eventuell zunächst an eine Auswertungseinrichtung zum Umrechnen der Lageinformation in die Durchflußmenge, oder direkt an eine Anzeige- und Kontrolleinrichtung (7a) in einer Leitwarte oder außen am Ventil (1) sowie an eine Steuereinrichtung (7a, 7b) zur Ansteuerung eines Mindestmengenventils (2) weiterleitet.

Die Meßvorrichtung (11) selbst kann auf verschiedene Weise realisiert werden. Hierbei kann es sich um eine mechanische, hydraulisch, elektrisch, elektronisch oder optisch arbeitende Vorrichtung handeln, bzw. können auch Kombinationen der verschiedenen Methoden infrage kommen.

Im folgenden werden einige Ausführungsbeispiele aufgezeigt.

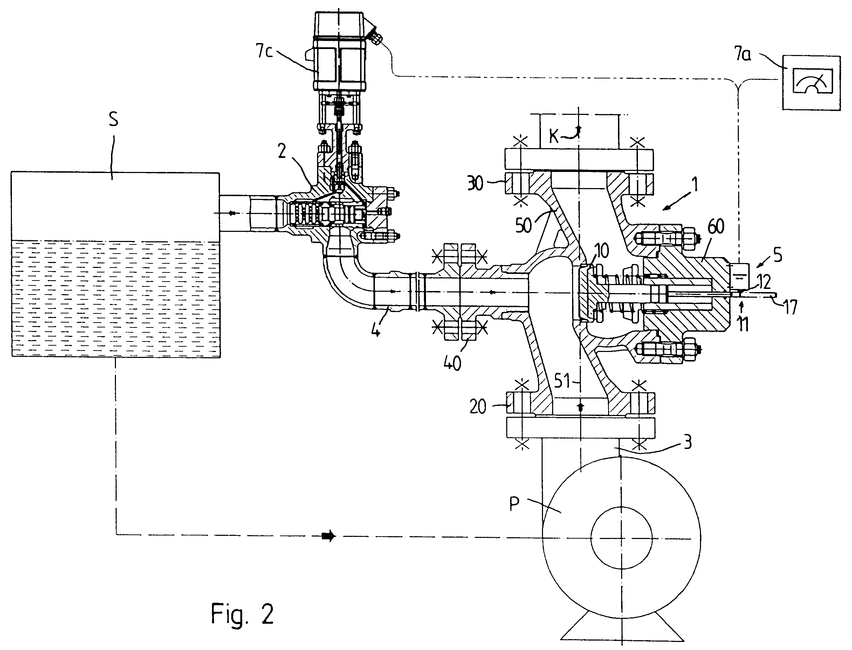

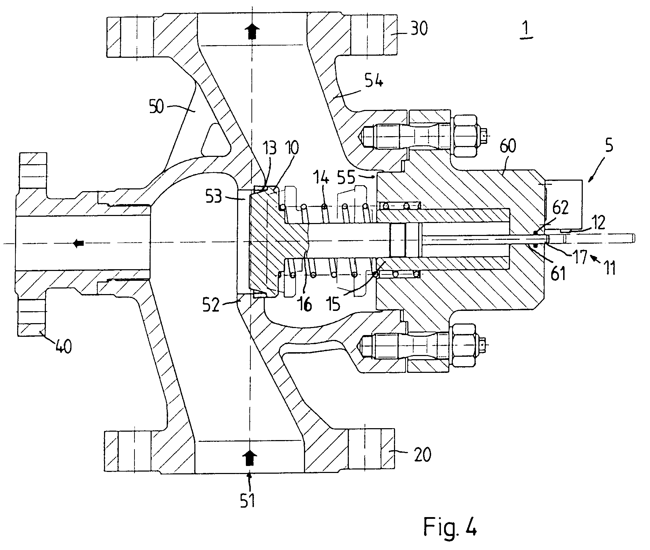

Fig. 2 und Fig. 4 zeigen eine recht einfache, kostengünstig aufgebaute erfindungsgemäße Meßvorrichtung (11). Hierbei besteht die Meßvorrichtung (11) aus einem auf die Montagewand (60) angebrachten Endschalter (12). Der Meßstab (17) wird, wie zuvor beschrieben, durch die Montagewand (60) nach außen geführt und stößt in einer gewissen Öffnungsstellung des Ventiltellers (10) mit seinem freien Ende gegen einen Endschalter (12), wodurch wiederum ein einfaches und kostengünstig aufgebautes Mindestmengen-Auf-/Zu-Ventil (2) in der Bypass-Leitung (4) geschlossen wird. Das Mindestmengenventil (2) kann in diesem Fall ein herkömmliches, hydraulisch arbeitendes Auf-/Zu-Ventil sein, welches z.B. über einen Magnetschalter (7c) gesteuert wird. Der Schaltimpuls des Endschalters (12) kann selbstverständlich auch zur Kontrolle zu einer Anzeigevorrichtung (7a) weitergeleitet werden.

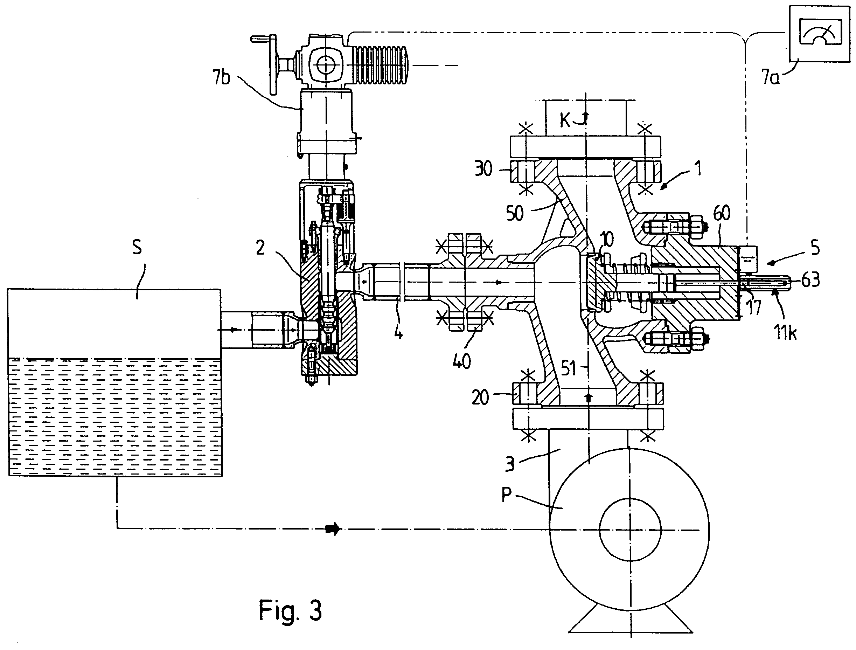

Fig. 3 zeigt eine kapazitiv arbeitende Meßaufnahmevorrichtung (11k) zur kontinuierlichen Bestimmung der Öffnungsstellung des Rückschlagventils (1) bzw. der Durchflußmenge. Hierbei ragt ein aus dielektrischem Material gefertigter Meßstab (17) in eine Meßkammer (63) an der Montagewand (60) hinein. In der Meßkammer (63) befindet sich eine Art Plattenkondensator, dessen Kapazität in Abhängigkeit von dem in den Kondensator eingebrachten dielektrischen Meßstab (17) ermittelt wird. In ähnlicher Weise ist auch eine induktive Meßvorrichtung (11) möglich.

Bei Verwendung eines Rückschlagventils (1) mit kontinuierlich arbeitender Meßvorrichtung (11) wird das Meßsignal dazu verwendet, ein Mindestmengenregelventil (2) anzusteuern, welches über einen kontinuierlich arbeitenden Betrieb genau entsprechend der benötigten Mindestmenge geregelt wird. Selbstverständlich kann auch dieses Signal zu einer Kontrolleinrichtung (7a), z.B. in der Leitwarte, geführt werden.

In einer weiteren, nicht dargestellten Ausführungsform wird kontinuierlich die Lage des Rückschlagventiltellers über eine Ohm'sche Widerstandsmessung ermittelt. Hierzu ist am Ende des aus leitfähigem Material gefertigten Meßstabs (17) ein elektrischer Kontakt befestigt. Weiterhin befindet sich an der Montagewand (60) oder in der Meßkammer (63) ein gegen den Meßstab (17) gedrückter Schleifkontakt. Es wird dann der mit der Lage des Meßstabs (17) sich verändernde Widerstand zwischen dem Schleifkontakt und dem Kontakt am Ende des Meßstabs (17) ermittelt. Vorzugsweise ist der Meßstab (17) bei dieser Ausführungsform durch die Montagewand (60) nach außen geführt.

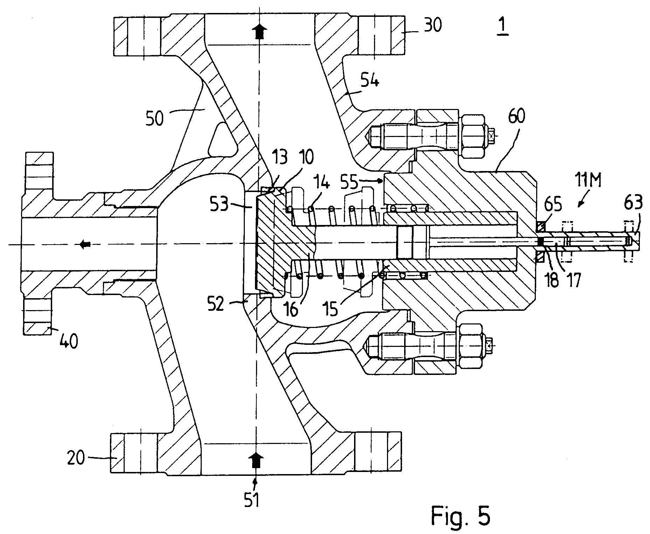

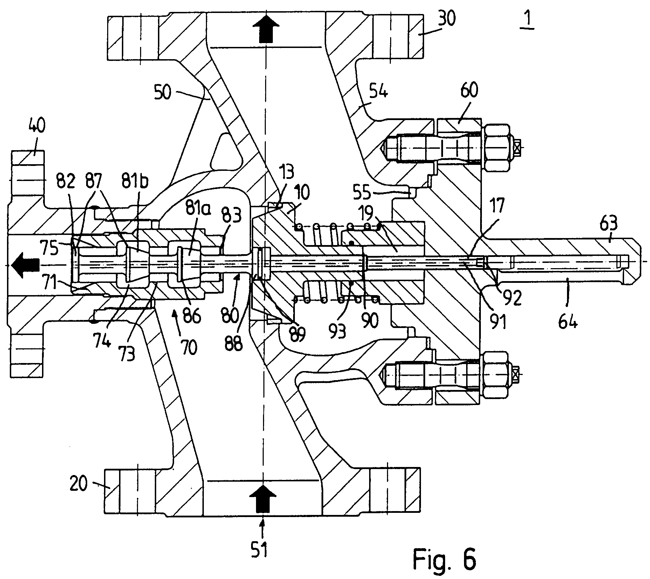

Fig. 5 und Fig. 6 zeigen zwei weitere einfache Möglichkeiten, die Lage des Meßstabs (17) außen am Gehäuse sichtbar zu machen. In Fig. 6 befindet sich in der Meßkammer (63) ein Schauglas (64), um die Lage des Meßstabs (17) zu kontrollieren. Vorzugsweise befinden sich am Meßstab (17) oder in der Meßkammer (63) Markierungen oder eine Skala. Soll bei diesem Ausführungsbeispiel ein Signal zur Steuerung eines Mindestmengenventils (2) oder zur Weitergabe an eine Anzeigevorrichtung (7a) in einer Leitwarte erfolgen, so bietet sich eine optische Auswertung der Lage des Meßstabs (17), z.B. über eine Videokamera mit angeschlossenem Bilderkennungssystem, an. Weiterhin ist z.B. auch die Verwendung einer Lichtschranke, bzw. einer Reflektionslichtschranke, zum Schalten eines Mindestmengen-Ein-/Aus-Ventils möglich. Zur Ansteuerung eines kontinuierlich arbeitenden Mindestmengenventils (2) bietet sich die Verwendung eines Lichtschrankenarrays oder dgl. entlang des Schauglases (64) an.

Im Ausführungsbeispiel in Fig. 5 weist der Meßstab (17) einen magnetischen Abschnitt (65) auf und ragt in einer nach außen in der Montagewand (60) angebrachte, nach außen geschlossene und zur Innenseite geöffnete hülsenartige Meßkammer (63) hinein. Der Innendurchmesser der Meßkammer (63) ist so groß, daß der Meßstab (17) in loser Passung in der Meßkammer (63) geführt wird. Der Außendurchmesser ist nur wenig größer als der Innendurchmesser. Zum Druckausgleich zum Gehäuseinneren befinden sich in der Innenwand in der Meßkammer (63) oder im Meßstab (17) Längsschlitze. Über die hülsenartige Meßkammer (63) ist außen ein zum Magnetabschnitt (18) des Meßstabes (17) entgegengesetzt gepolter Magnetring (65) in loser Passung aufgeschoben. Dieser Magnetring (65) wird durch den Magnetabschnitt (18) des Meßstabes (17) bei der Verschiebung des Meßstabes (17) mitgezogen und zeigt außen die Lage des Magnetabschnitts (18) bzw. des Meßstabs (17) an. Vorteilhafterweise befindet sich bei dieser Ausführungsform außen an der Meßkammer (63) Markierungen oder eine Skala. Auch hierbei lassen sich mittels optischer Auswertungen an bestimmten Punkten Schaltsignale oder ein kontinuierliches Signal zur Ansteuerung eines Mindestmengenventils (2) und zur Weiterleitung an eine Kontrolleinrichtung (7a) erzeugen.

Je nach Art und Aufbau der Meßvorrichtung (11) kann ggf. auf den in den gezeigten Ausführungsbeispielen verwendeten Meßstab (17) auch verzichtet werden und direkt die Lage des Stutzens (16) oder sogar direkt die Lage des Ventiltellers (10) bestimmt werden. Am Ventilgehäuse (50) befindet sich ein koaxial zur Durchgangsöffnung (53) gegenüberliegend der Montagewand (60) angeordneter Bypass-Stutzen (40) zum Anschluß der Bypass-Leitung (4).

In einer besonders vorteilhaften Ausführungsform betätigt der Rückschlagventilteller (10) ein zu diesem koaxiales Mindestmengenventil (70), so daß dieses bei geschlossenem Rückschlagventilteller (10) voll geöffnet ist und von der Zuflußseite einen Durchang zum Bypass-Stutzen (40) freigibt und bei voll geöffnetem Rückschlagventilteller (10) den Durchgang von der Zuflußseite des Ventils (1) und zum Bypass-Stutzen (40) verschließt.

Ein Ausführungsbeispiel eines solchen Rückschlagventils mit integriertem Mindestmengenventil (70) ist in Fig. 6 dargestellt. Das Mindestmengenventil (70) ist hierbei ein hochdruckgeeignetes dreistufiges Ventil mit einer am Rückschlagventilteller (10) angeordneten Regelspindel (80) mit koaxial zum Rückschlagventilteller (10) hintereinander liegenden Ventilkegeln (81A, 81B) und einem Ventilteller (82).

Die Regelspindel (80) ist axial verschieblich in einer Regelbuchse (71) geführt. In der Öffnungsstellung des Rückschlagventiltellers (10) drückt der montageplattenseitig vorderste Ventilkegel (81A) mit seinem entsprechend geformten äußersten hinteren Rand (86) gegen einen vorne innen in der Regelbuchse (71) angeordneten, in Richtung Bypass-Stutzen (40) weisenden Dichtsitz (83). Die Ventilkegel (81A, 81B) und der hintenliegende Ventilteller (82) liegen mit ihren zylindrischen Gleitflächen (87) an zylindrischen Wandungsbereichen (73) der Regelbuchse (71).

Wird der Rückschlagventilteller (10) in Schließstellung bewegt, bewegen sich die Gleitflächen (87) an den Ventilkegeln (81A, 81B) bzw. dem Ventilteller (82) an den zylindrischen Wandungsbereichen (83) der Regelbuchse entlang in Richtung Bypass-Stutzen (40) bis die Ventilkegel (81A, 81B) in Erweiterungen (74) der Regelbuchse (71) gelangen, so daß das flüssige Medium bypaßseitig abfließen kann. Die Regelspindel (80) wird dann nur noch über den Ventilteller (82) an in der Innenwandung der Regelbuchse (71) im hinteren, bypaßstutzenseitigen Bereich liegenden Stegen (75) geführt. Die Wandungsbereiche zwischen den Stegen (75) sind nach hinten konisch erweiternd ausgenommen, um auch hier eine kontinuierliche Veränderung der Durchflußöffnung bei Verstellen der Regelspindel (80) zu gewährleisten.

Die Regelspindel (80) ist mit dem Rückschlagventilteller (10) form- und kraftschlüssig verbunden. Hierzu ist der Rückschlagventilteller mit seinem Führungsstutzen (16) der Länge nach zentrisch durchbohrt. In diese Bohrung ist der montagewandseitige Teil der Regelspindel (80) von der Bypass-Stutzenseite aus hineingeschoben und schlägt mit einem in den Rückschlagventilteller (10) greifenden Verstärkungsring (88) der Regelspindel (80) am Ventilteller (10) an. Zur abdichtenden Verbindung mit dem Rückschlagventilteller (10) ist dieser Verstärkungsring (80) von einer Dichtung (89) umfaßt. Über einen Federring (90), welcher um das montagewandseitige Ende der Regelspindel(80) greift und gegen den Führungsstutzen (16) des Rückschlagventiltellers (10) drückt wird die Regelspindel (80) am Rückschlagventilteller (10) festgeklemmt. Der Rückschlagventilteller (10) ist mit seinem Führungsstutzen (16) in gleicher Weise in der Buchse (15) der Montagewand (60) geführt, wie in den vorherigen Ausführungsbeispielen.

Zur Druckentlastung ist eine Druckentlastungsbohrung (91) vorgesehen, die sich axial von dem bypaßseitig angeordneten Ventilteller (82) durch die Regelspindel (80) bis in den Bereich des Innenraums (19) des Führungsstutzens (16) erstreckt. Zur Abdichtung ist zwischen der Buchse (15) und dem Führungsstutzen (16) eine Dichtung (93) vorgesehen.

Die Grundfläche des bypaßseitigen Ventiltellers (82) und die Grundfläche des Führungsstutzens (16) mit der eingesetzten Regelspindel (80) zum Innenraum (19) sollten vorzugsweise gleich groß sein, um den gewöhnlich unbekannten Druck in der Bypass-Leitung (4) zu neutralisieren.

Am montagewandseitigen Ende ist in der Druckentlastungsbohrung (91) in der Regelspindel (80) ein Gewinde (92) zur Aufnahme einer Gewindestange zur leichteren Entnahme der Regelspindel (80) bei der Demontage eingedreht.

Durch die dreistufige Ausbildung des Mindestmengenventils (70) werden höheren Druckverhältnissen, vor allem auch im geöffneten Zustand des Mindestmengenventils (70) Rechnung getragen. Alternativ kann das Mindestmengenventil (70) auch ein-, zwei- oder selbstverständlich auch mehr als dreistufig ausgebildet sein, wenn die Höhe des Druckes entsprechend geringer bzw. größer ist.

Weitere Ausführungsbeispiele für integrierte Mindestmengenventile (70) in einem Rückschlagventil (1) sind in der P 44 22 749.3 und der PCT/EP95/02411 der Anmelderin offenbart.

In einer besonderes vorteilhaften Ausführungsform ist die Montagewand (60) zum Ausbau den Ventilteile (10, 14, 15, 16, 17, 80, 71) und/oder Teile der Meßvorrichtung (11) von außen abnehmbar abdichtend am Gehäuse (50) befestigt. Dies ermöglicht schnellere Wartungsarbeiten, ohne daß zuvor am Ventil (1) angeschlossene Rohrleitungen demontiert werden müssen.

Die gesamte Demontage der Meßvorrichtung und der Ventilteile erfolgt bei der in Fig. 6 dargestellten Ausführung wie folgt: Zunächst wird die Montagewand (60) vom Gehäuse (50) gelöst und vorsichtig nach hinten über den Meßstab (17) gemeinsam mit der Führungsbuchse (15) vom Führungsstutzen (16) abgezogen. Es wird dann die Feder (14) entnommen. Anschließend wird der Sicherungsring (90) von der Regelspindel (80) entfernt. Es wird dann der Ventilteller (10) von der Regelspindel (50) abgezogen. Anschließend wird mit Hilfe eines handelsüblichen Hohlsteckschlüssels die Regelbuchse (71) mitsamt der Regelspindel (80) aus dem Bypass-Stutzen (40) geschraubt und durch die Gehäuseöffnung (55) entnommen. Anschließend kann die Regelspindel (80) nach hinten aus der Regelbuchse (71) herausgezogen werden. Gegebenenfalls kann zum Herausziehen der Regelspindel (80) mit der Regelbuchse (71) und beim Herausziehen der Regelspindel (80) aus der Regelbuchse (71) eine Gewindestange oder dgl. zu Hilfe genommen werden, welche in die montageplattenseitige Stirnseite der Regelspindel (80) einschraubbar ist.

Bei Einsatz eines integrierten Mindestmengenventils (70) in das erfindungsgemäße Rückschlagventil (1) bietet sich besonders die einfachen Ausführungsform mit einem Schauglas (64) gemäß Fig. 6 an, da hier ja prinzipiell auf eine Weiterleitung der Lageinformation an eine Steuerung verzichtet werden kann und lediglich die Funktion des Ventils (1) durch das Bedienpersonal vor Ort optisch kontrollierbar sein soll.

Das erfindungsgemäße Ventil (1) ist im Prinzip bei allen flüssigen Medien einsetzbar.

Das Ventilgehäuse (50) ist vorzugsweise als Gußgehäuse ausgeführt. Dies verringert den Herstellungspreis, reduziert den Materialeinsatz und ist daher resourcenschonender. Bei der Verwendung von nicht gießbaren Sonderwerkstoffen, z.B. für einen Einsatz der Rückschlagventile (1) in Bereichen, in denen Seewasser oder Chemiebeständigkeit oder eine besondere Temperaturbeständigkeit verlangt wird, kann das Gehäuse (50) auch aus Vollmaterial, z.B. speziellem VA-Materialien, Kupfer oder anderem, gedreht werden. Der Aufbau innerhalb eines gedrehten Gehäuses und eines Gußgehäuses (50) ist bis auf einige fertigungstechnische Änderungen im wesentlichen gleich.

Der Bypass-Stutzen (40) ist in der Gußgehäuseversion entweder in einen Querstutzen des Ventilgehäuses (50) eingeschraubt und mit einer Dichtschweißnaht versehen oder stumpf an den Querstutzen angesetzt und mit diesem verschweißt. In der gedrehten Ausführungsform ist der gesamte Bypass-Stutzen (40) an das Ventilgehäuse (50) über einen Flansch, ähnlich wie die Montagewand (60), abdichtend an das Gehäuse (50) angeschraubt.

## Patentansprüche

1. Regelsystem zur Regelung von Durchflußmindestmengen mit mindestens einer Hauptdurchgangsleitung (3), mindestens einem darin angeordneten Rückschlagventil (1), mindestens einer von der Hauptdurchgangsleitung (3) abzweigenden Bypass-Leitung (4), mindestens einem in der Bypass-Leitung (4) oder an der Abzweigung der Bypass-Leitung (4) angeordneten, steuerbaren Mindestmengenventil (2) und mindestens einer in und/oder an der Hauptdurchgangsleitung (3) angeordneten Meßapparatur (5) zum Erfassen der Durchflußmenge,
dadurch gekennzeichnet, daß die Durchflußmengen-Meßapparatur (5) in das Rückschlagventil (1) integriert ist und eine Vorrichtung (11) zur Lageermittlung eines Schließelementes (10) innerhalb des Rückschlagventils (1) aufweist,
wobei über die Lage des Schließelements (10) der jeweilige Öffnungsquerschnitt des Rückschlagventils (1) und damit die Durchflußmenge bestimmbar ist.

2. Regelsystem nach Anspruch 1, dadurch gekennzeichnet, daß an die Durchflußmengen-Meßapparatur (5) eine Anzeige- und/oder Kontrolleinrichtung (7a) und/oder eine Steuereinrichtung (7b, 7c) für das Mindestmengenventil (2) angeschlossen ist.

3. Regelsystem nach Anspruch 1 oder 2, dadurch gekennzeichnet, daß die Durchflußmengen-Meßapparatur (5) mindestens einen Schalter (12) aufweist, welcher unterhalb und/oder oberhalb eines bestimmten Öffnungsquerschnitts des Rückschlagventils (1) ein Kontroll- und/oder Steuersignal erzeugt.

4. Regelsystem nach einem der Ansprüche 1 bis 3, dadurch gekennzeichnet, daß die Durchflußmengen-Meßapparatur (5) einen Endschalter (12) aufweist, welcher bei Öffnung des Rückschlagventils (1) über eine bestimmte Öffnungsstellung hinaus ein Kontroll- und/oder Steuersignal erzeugt.

5. Regelsystem nach einem der Ansprüche 1 bis 4, dadurch gekennzeichnet, daß die Durchflußmengen-Meßapparatur (5) ein kontinuierlich mit dem jeweiligen Öffnungsquerschnitt des Rückschlagventils (1) veränderliches Kontroll- und/oder Steuersignal erzeugt.

6. Regelsystem nach einem oder mehreren der vorstehenden Ansprüche 1 bis 5, dadurch gekennzeichnet, daß das Mindestmengenventil (2) eine Auf- und eine Schließstellung aufweist und daß das Mindestmengenventil (2) nur bei Öffnung des Rückschlagventils (1) über einen bestimmten Öffnungsquerschnitt hinaus durch die Steuereinrichtung (7b) in die Schließstellung geschaltet wird.

7. Regelsystem nach einem oder mehreren der vorstehenden Ansprüche 1 bis 5, dadurch gekennzeichnet, daß das Mindestmengenventil (2) zwischen der Auf- und Schließstellung unter kontinuierlicher Veränderung des Öffnungsquerschnitts des Ventils (2) verstellbar ist und daß das Mindestmengenventil (2) in reziproker Abhängigkeit vom Öffnungsquerschnitt des Rückschlagventils (1) durch die Steuereinrichtung (7c) verstellt wird.

8. Rückschlagventil, insbesondere zum Einsatz in einem Durchflußmindestmengen-Regelsystem nach einem oder mehreren der Ansprüche 1 bis 7, mit einem Ventilgehäuse (50) mit mindestens einem Zuflußstutzen (20) und mindestens einem Abflußstutzen (30) und einem im Ventilgehäuse (50) beweglich angeordneten Schließelement (10), welches im geschlossenen Zustand durch einen hinter dem Ventil (1) bestehenden Druck und/oder mittels eines Rückstellglieds (14), entgegen einen vor dem Ventil (1) bestehenden niedrigeren oder gleich hohen Druck, gegen einen im Ventilgehäuse (50) angeordneten, zur Abflußseite weisenden Dichtsitz (13) gedrückt wird und welches im geöffneten Zustand durch einen vor dem Ventil bestehenden erhöhten Druck, entgegen einem hinter dem Ventil (1) bestehenden niedrigeren Druck und/oder entgegen einer Rückstellkraft, vom Dichtsitz (13) weggedrückt wird, dadurch gekennzeichnet, daß im Gehäuse (50) und/oder am Schließelement (10) eine Vorrichtung (11) zur Bestimmung der Lage des Schließelements (10) innerhalb des Gehäuses (50) und zur Visualisierung der Lageinformation außerhalb des Gehäuses (50) und/oder zur Übermittlung der Lageinformation an mindestens eine Auswerte- und/oder Kontrolleinrichtung (7a) und/oder mindestens eine Steuereinrichtung (7b, 7c) angeordnet ist.

9. Rückschlagventil nach Anspruch 8, dadurch gekennzeichnet, daß das Schließelement (10) ein Ventilteller (10) ist, der mittels einer daran angeordneten, in loser Passung in einer im Gehäuse (50) angeordneten Führungsbuchse (15) geführten Führungsstutzen (16) axial verschiebbar gelagert ist.

10. Rückschlagventil nach Anspruch 9, dadurch gekennzeichnet, daß das Ventilgehäuse (50) eine Mittelwand (52) aufweist, welche im wesentlichen parallel zu einer vom Zuflußstutzen (20) zum gegenüberliegenden Abflußstutzen (30) verlaufenden Hauptdurchgangsrichtung (51) verläuft, und welche den Gehäuseinnenraum in einen zuflußseitigen und einen abflußseitigen Raum unterteilt und in der sich quer zur Hauptdurchgangsrichtung (51) eine Durchgangsöffnung (53) mit einem abflußseitig angeordneten Dichtsitz (13) befindet, und daß das Gehäuse (50) eine im wesentlichen parallel zur Mittelwand (52) abflußseitig liegende Montagewand (60) aufweist, an welcher koaxial zur Durchgangsöffnung (53) die Führungsbuchse (15) angeordnet ist, in welcher der Führungsstutzen (16) des koaxial angeordneten Ventiltellers (10) axial verschieblich gelagert ist.

11. Rückschlagventil nach Anspruch 10, dadurch gekennzeichnet, daß zwischen Montagewand (60) und Ventilteller (10) eine Feder (14) angeordnet ist, welche den Ventilteller (10) von der Montagewand (60) aus gegen den Dichtsitz (13) der Durchgangsöffnung (53) drückt.

12. Rückschlagventil nach Anspruch 10 oder 11, dadurch gekennzeichnet, daß die Montagewand (60) einen Teil der Gehäuseaußenwand (54) bildet.

13. Rückschlagventil nach einem oder mehreren der vorstehenden Ansprüche 10 bis 12, dadurch gekennzeichnet, daß am Führungsstutzen (16) in montagewandseitiger Verlängerung desselben ein Meßstab (17) angeordnet ist, welcher in einer Bohrung (61) durch die Montagewand (60), mit einem Dichtring (62) gegen die Montagewand (60) abgedichtet, verschiebbar nach außen geführt ist.

14. Rückschlagventil nach einem oder mehreren der vorstehenden Ansprüche 10 bis 12, dadurch gekennzeichnet, daß am Führungsstutzen (16) in montagewandseitiger Verlängerung desselben ein Meßstab (17) angeordnet ist, welcher in eine an der Montagewand (60) angeordnete und/oder von der Montagewand (60) gebildete Meßkammer (63) hineinragt.

15. Rückschlagventil nach einem oder mehreren der vorstehenden Ansprüche 10 bis 14, dadurch gekennzeichnet, daß an der Montagewand (60) und/oder in oder an der Meßkammer (63) und/oder am Meßstab (17) eine Meßvorrichtung (11) angeordnet ist, welche den Hub des Meßstabs (17) und/oder des Führungsstutzens (16) bezüglich eines Referenzpunktes mißt und die Meßdaten an eine Auswertungs-, Anzeige-, Kontroll- und/oder Steuereinrichtung (7a, 7b, 7c) weiterleitet.

16. Rückschlagventil nach einem oder mehreren der vorstehenden Ansprüche 8 bis 15, dadurch gekennzeichnet, daß die Meßvorrichtung (11) eine mechanische, hydraulische, elektrisch, elektronische und/oder optische Meßvorrichtung (11) ist.

17. Rückschlagventil nach einem oder mehreren der vorstehenden Ansprüche 8 bis 16, dadurch gekennzeichnet, daß die Meßvorrichtung (11) eine kapazitive Meßvorrichtung (11R) ist.

18. Rückschlagventil nach einem oder mehreren der vorstehenden Ansprüche 8 bis 17, dadurch gekennzeichnet, daß die Meßvorrichtung (11) eine induktive Meßvorrichtung ist.

19. Rückschlagventil nach einem oder mehreren der vorstehenden Ansprüche 8 bis 18, dadurch gekennzeichnet, daß die Meßvorrichtung (11) eine magnetische Meßvorrichtung (11M) ist.

20. Rückschlagventil nach Anspruch 15 und 19, dadurch gekennzeichnet, daß der Meßstab (17) einen magnetischen Abschnitt (65) aufweist und in einer außen an der Montagewand (60) angebrachte, nach außen geschlossene, zur Innenseite geöffnete, hülsenartige Meßkammer (63) hineinragt, deren Innendurchmesser so groß ist, daß der Meßstab (17) in loser Passung in der Meßkammer (63) geführt wird, und deren Außendurchmesser nur wenig größer ist als der Innendurchmesser, und daß über die hülsenartige Meßkammer (63) ein zum Magnetabschnitt (18) des Meßstabes (17) entgegengesetzt gepolter Magnetring (65) in loser Passung aufgeschoben ist, welcher durch den Magnetabschnitt (18) des Meßstabs (17) bei der Verschiebung des Meßstabs (17) mitgezogen wird und außen die Lage des Magnetabschnitts (18) bzw. des Meßstabes (17) in der Meßkammer (63) anzeigt.

21. Rückschlagventil nach einem oder mehreren der vorstehenden Ansprüche 8 bis 20, dadurch gekennzeichnet, daß die Meßvorrichtung (11) eine Ohm'sche Widerstandsmeßvorichtung ist.

22. Rückschlagventil nach einem oder mehreren der vorstehenden Ansprüche 8 bis 21, dadurch gekennzeichnet, daß die Meßvorrichtung (11) ein Endschalter (12) ist, welcher am freien Ende des Meßstabs (17) und/oder an einer am Meßstab (17) angeordneten Schaltkante und/oder Schaltnase geschaltet wird.

23. Rückschlagventil nach einem oder mehreren der vorstehenden Ansprüche 8 bis 22, dadurch gekennzeichnet, daß sich in der Gehäuseaußenwand (54), der Montagewand (60) und/oder in der Wand der Meßkammer (63) mindestens ein Schauglas (63) zur optischen Überwachung des Ventiltellers (10) und/oder des Führungsstutzens (16) und/oder des Meßstabes (17) befindet.

24. Rückschlagventil nach einem oder mehreren der vorstehenden Ansprüche 8 bis 23, dadurch gekennzeichnet, daß am Meßstab (17) und/oder an der Meßkammer (63) und/oder am Führungsstutzen (16) Markierungen und/oder Skalierungen angebracht sind.

25. Rückschlagventil nach einem oder mehreren der vorstehenden Ansprüche 8 bis 24, dadurch gekennzeichnet, daß das Ventilgehäuse (50) einen Anschlußstutzen (40) für eine Bypass-Leitung (4) aufweist.

26. Rückschlagventil nach einem oder mehreren der vorstehenden Ansprüche 8 bis 25, dadurch gekennzeichnet, daß der Bypass-Stutzen (40) koaxial zur Durchgangsöffnung (53), gegenüberliegend der Montagewand (60) angeordnet ist.

27. Rückschlagventil nach Anspruch 26, dadurch gekennzeichnet, daß der Rückschlagventilteller (10) ein zu diesem koaxiales, mindestens einstufiges Mindestmengenventil (70) betätigt, so daß dieses bei geschlossenem Rückschlagventilteller (10) voll geöffnet ist und von der Zuflußseite eine Öffnung zu dem Bypass-Stutzen (40) freigibt und bei voll geöffnetem Rückschlagventilteller (10) den Durchgang von der Zuflußseite des Rückschlagventils (1) zum Bypass-Stutzen (40) verschließt.

28. Rückschlagventil nach Anspruch 27,
dadurch gekennzeichnet, daß das Mindestmengenventil (70) ein ein- oder mehrstufiges Ventil (70) mit mindestens einem über eine Regelspindel (80) an dem Rückschlagventilteller (10) angeordneten Ventilkegel (81a, 81b) oder Ventilteller (82) ist, welcher bei geschlossenem Mindestmengenventil (70) gegen mindestens einen in einer, den Zufluß zum Bypass-Stutzen (40) bildenden Regelbuchse (71) angeordneten, in Richtung Bypass-Stutzen (40) weisenden Ventilsitz (82) drückt und das Mindestmengenventil (70) dichtend abschließt.

29. Rückschlagventil nach Anspruch 28, dadurch gekennzeichnet, daß der montagewandseitige Teil der Regelspindel (80) den Meßstab (17) bildet.

30. Rückschlagventil nach einem oder mehreren der Ansprüche 28 bis 29, dadurch gekennzeichnet, daß der Rückschlagventilteller (10) und die Regelspindel (80) im Ventilgehäuse (50) voneinander lösbar verbunden angeordnet sind, und die Regelspindel (80) an dem zur Montagewand (60) weisenden Ende mit einer Werkzeugaufnahme (92) versehen ist und/oder daß die Regelbuchse (71) lösbar am Bypass-Stutzen (40) angeordnet ist.

31. Rückschlagventil nach einem oder mehreren der vorstehenden Ansprüche 8 bis 30, dadurch gekennzeichnet, daß die Montagewand (60) zum Ausbau der Ventilteile (10, 14, 15, 16, 17, 80, 71) und/oder der Teile der Meßvorrichtung (11), von außen abnehmbar, abdichtend am Gehäuse (50) befestigt ist.
